# FASCICULE DE BREVET EUROPEEN

(11) **EP 1 712 456 B1**
(45) Date de publication et mention de la délivrance du brevet: **09.12.2009**
(21) Numéro de dépôt: 06290609.4
(22) Date de dépôt: 12.04.2006
(51) Int. Cl.: B62H 3/00, B62H 3/02, B62H 5/00

(54) **Dispositif antivol de parking pour vélo**
Anti-Diebstahlvorrichtung für Fahrrad
Anti-theft device for bicycle

(30) Priorité: 12.04.2005 FR 0503585
(43) Date de publication de la demande: 18.10.2006
(73) Titulaire: Marzat, Claude, 33170 Gradignan (FR)
(72) Inventeur: Marzat, Claude, 33170 Gradignan (FR)
(74) Mandataire: Fantin, Laurent

(56) Documents cités:
- DE-A1- 3 238 404
- DE-U1- 9 309 642
- FR-A- 2 746 360
- FR-A- 2 789 646
- FR-A1- 2 859 161

## Description

La présente invention concerne un dispositif antivol de parking pour vélo.

Le dispositif selon l'invention permet de résoudre plusieurs problématiques, de façon simple, industrielle, sans nécessiter de maintenance. Plus particulièrement, le dispositif trouve application pour des collectivités sur des espaces publies : parkings scolaires, parking pour commerces, parking de ville.

On connaît des dispositifs du type cadenas en U, antivol annulaire, chaîne ou câble avec cadenas, etc qui évitent des vols de vélo ou tout du moins sont dissuasifs vis-à-vis de la plupart des voleurs.

Néanmoins, un vélo est composé de plusieurs parties aisément démontables à savoir au moins :
- un cadre,
- une roue avant,
- une roue arrière, et
- une selle.

Le guidon, tout comme le pédalier ou les éventuels dérailleurs, requiert généralement un outillage plus sophistiqué et du temps pour procéder au démontage, deux éléments dont ne disposent pas la plupart des voleurs.

Or, lorsque le propriétaire d'un vélo utilise un des moyens antivol précités, on peut généralement lier le cadre à un point fixe et au plus au cadre et à une des roues. La selle est très difficile à protéger et lorsque l'on souhaite éviter le vol de la seconde roue, il faut prévoir un second dispositif antivol. L'encombrement, le poids, la mise en oeuvre rendent cette solution très difficilement applicable.

Il existe d'autres solutions de façon à immobiliser un vélo et surtout qui permettent d'éviter le vol de selle. On trouve un mode de réalisation dans le brevet allemand DE 32 38404. Dans cet agencement, il est prévu un poteau avec des premiers moyens pour attacher le cadre audit poteau grâce à un antivol à câble ou à chaîne du commerce. Ensuite, sur ce poteau, il est rapporté un chapeau susceptible d'être déplacé en translation pour venir couvrir la selle et maintenir simultanément le vélo plaqué au sol. Une fois plaqué sur la selle, ce chapeau est verrouillé en translation. On comprend les inconvénients de ce dispositif du fait d'un accessoire mobile comme le chapeau. De plus, il faut quand même prévoir deux antivols et pour la roue avant, la sécurisation est possible mais délicate.

Le but de la présente invention est de proposer un dispositif antivol qui permet grâce à un antivol unique de verrouiller les différents composants d'un vélo : le cadre, les deux roues et la selle.

On entend, pour la suite de la description, par "vélo" un vélo simple avec pédales mais aussi avec des dérailleurs éventuels y compris les vélos ayant une assistance motorisée.

L'invention est maintenant décrite en détail suivant un mode de réalisation particulier, non limitatif, ceci en regard des dessins annexés, dessins sur lesquels les différentes figures représentent :
- figure 1 : une vue en perspective d'un vélo positionné dans le dispositif selon l'invention,

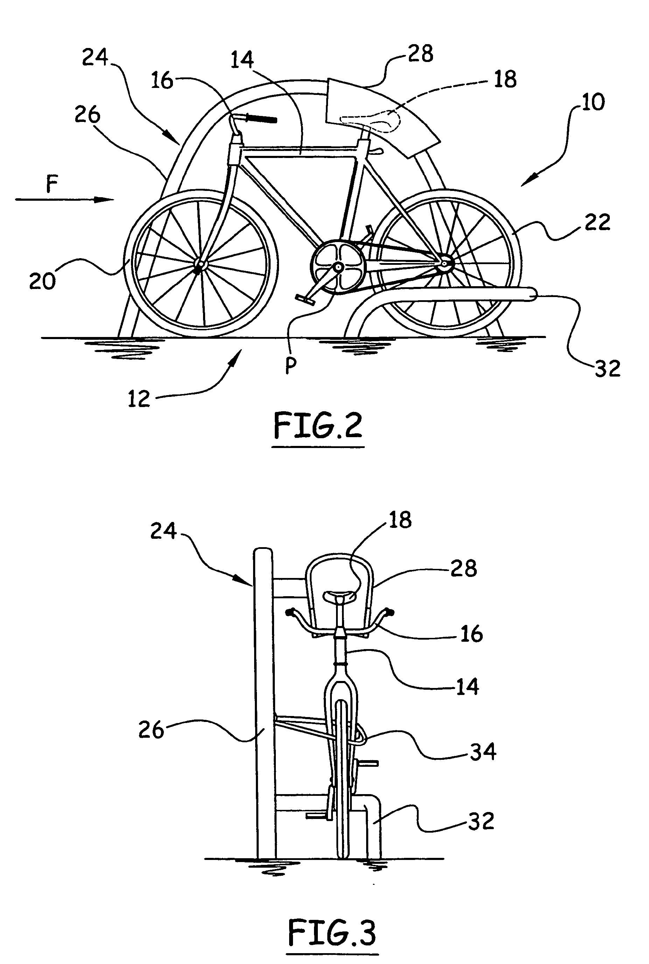

- figure 2 : une vue en élévation latérale avec arrachement partiel de ce même vélo positionné dans le dispositif, et
- figure 3 : une vue de face de ce même vélo positionné également dans le dispositif.

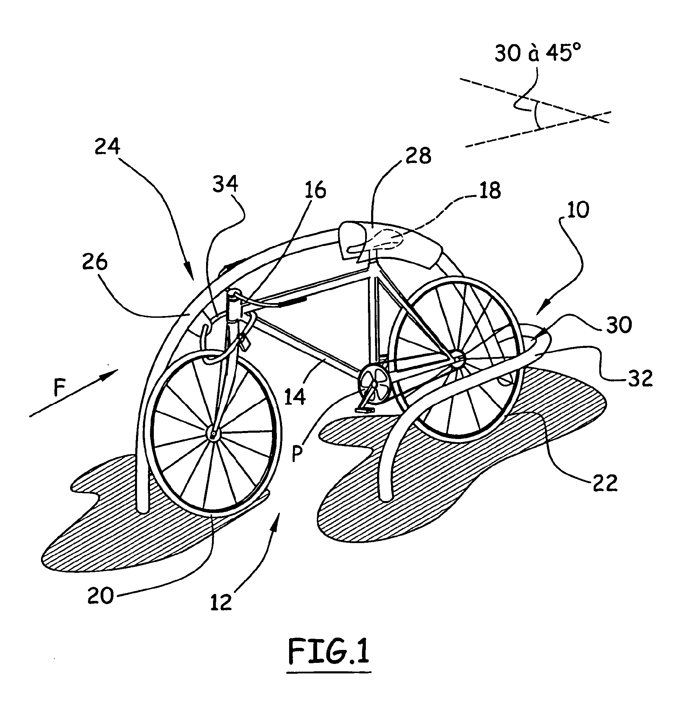

Sur la figure 1, on a représenté un dispositif (10) selon la présente invention, destiné à recevoir un vélo (12).

Le vélo (12) selon l'invention est représenté au plus simple et comprend de façon connue un cadre (14), un guidon (16), une selle (18), une roue avant (20) et une roue arrière (22).

Un ensemble d'entraînement P, comprenant un boîtier de pédalier, un pédalier avec des manivelles aux extrémités desquelles sont positionnées des pédales est associé au cadre.

La selle (18) est réglable en hauteur et peut à l'extrême être retirée du cadre dans lequel elle est rapportée.

Le guidon (16) est rapporté de façon solidaire et pivotante sur le cadre (14).

Chacune des roues (20,22) peut être aisément démontée généralement grâce à des fixations rapides.

Le dispositif (10) selon l'invention comprend un bâti (24) fixe, solidarisé au sol ou à toute construction de sorte à interdire tout mouvement et tout déplacement. Ce bâti (24) est destiné à recevoir un vélo (12) positionné dans un sens donné, celui de la flèche F, en marche arrière.

Le bâti (24) comporte au moins un support (26) équipé d'une coiffe (28) fixe, inclinée vers l'arrière toujours considéré suivant la flèche F. Cette coiffe (28) est en forme de gouttière renversée, sensiblement à section en U renversé pour donner une précision.

Cette coiffe (28) est donc plus haute devant que derrière avec un angle de 30 à 45° pour donner un ordre d'idée.

De façon avantageuse le support (26) est en forme d'arc avec les deux extrémités solidarisées au sol, l'arc étant dans un plan parallèle à celui du vélo, en position de parking comme expliqué ci-après.

La coiffe (28) est solidaire de ce support (26), la coiffe étant en déport pour se situer dans le plan du vélo.

En complément, le bâti (24) plus particulièrement son support (26) est équipé d'un logement (30) de la roue arrière (22). Ce logement (30) est composé dans le mode de réalisation préférentiel représenté, d'un tube (32) issu du support (26) et qui vient former un U horizontal, en position basse, entre le sol et le boîtier de pédalier, l'ouverture du U vers l'avant.

Ce logement (30) permet l'introduction de la roue arrière (22) par déplacement arrière du vélo dans le sens de la flèche F et interdit les mouvements latéraux de cette roue arrière (22) et donc du cadre (14) qui lui est associé.

De façon perfectionnée, le support (26) est équipé d'un lien (34) souple, antivol tel qu'une chaîne ou un câble avec des anneaux aux extrémités. Ce lien est disposé pour venir sur l'avant lorsque le vélo est en place.

La mise en oeuvre du dispositif selon l'invention est simple pour l'utüisateur.

En effet, l'utilisateur recule son vélo dans le sens de la flèche F. La roue arrière (22) s'engage dans le logement (30). Simultanément, la selle (18) est guidée par la coiffe (28) puisque celle-ci est dans le plan du vélo.

L'utilisateur recule son vélo jusqu à ce que la selle (18) vienne en butée contre le fond de la gouttière constituant ladite coiffe (28). Le point d'appui dans la gouttière est variable et dépend de la hauteur du cadre et de la selle par rapport au cadre. Ainsi, plus la hauteur de selle par rapport au sol est faible, plus l'utilisateur recule son vélo. On note qu'il n'y a aucune manoeuvre, aucun calcul à faire, ce positionnement en butée est instinctif, simple et automatique, sans aucun mouvement ou déplacement de pièces du dispositif.

Dès lors, le vélo est immobilisé en hauteur. La roue arrière est elle aussi immobilisée latéralement.

Seule la roue avant peut bouger. C'est là que l'utilisateur vient placer son unique antivol et solidarise le cadre et la roue avant au support (26). De façon avantageuse, il peut utiliser le lien (34) prévu à cet effet pour assujettir le cadre et la roue si bien que l'utilisateur peut et se contente alors de ne disposer que d'un simple cadenas comme antivol.

On constate que le dispositif selon l'invention est particulièrement attractif car il facilite le positionnement du vélo qui est retenu verticalement dès sa mise en place, il ne nécessite aucune manoeuvre d'une quelconque pièce mobile, aucun réglage. L'utilisateur n'a plus qu'à verrouiller un antivol unique comme il le fait habituellement.

Par contre, le vélo (12) se trouve parfaitement sécurisé dans tous ses composants : cadre, selle et roues.

Le dispositif selon l'invention est particulièrement simple, réalisable industriellement, dépouillé pour faciliter son intégration dans les lieux publics, pouvant prendre des formes particulièrement esthétiques.

On peut aussi noter, à l'inverse, que la coiffe peut servir de support publicitaire si le lieu s'y prête.

Le coût de réalisation permet d'envisager des réalisations multiples et plusieurs dispositifs peuvent alors être combinés pour des gains évidents de place et de structure. Ainsi, un support (26) peut comporter de part et d'autre une coiffe (28) et un logement (30) en U, pour recevoir deux vélos côte à côte.

On note également un avantage découlant du dispositif, la selle est protégée des intempéries si la coiffe (28) est réalisée à partir d'une gouttière en matériau plein.

Selon un perfectionnement encore plus sécurisant, la gouttière a une section non seulement en U renversé mais en rectangle fendu longitudinalement en partie médiane inférieure. Ainsi, la selle pénètre dans la gouttière et seule la tige de selle passe dans la fente. Néanmoins, cette sécurisation peut limiter la polyvalence et l'adaptabilité à tous les types de vélos et tous les types de selles avec tous les réglages.

## Revendications

1. Dispositif (10) antivol de parking pour un vélo (12) comprenant au moins un cadre (14), un guidon (16), une selle (18), une roue avant (20) et une roue arrière (22), ledit dispositif (10) antivol comprenant un bâti (24) fixe, solidarisé au sol ou à toute construction et destiné à recevoir ledit vélo (12), comportant au moins un support (26) équipé d'une coiffe (28) fixe et destiné à recevoir un antivol apte à solidariser le cadre (14) et/ou la roue avant (20) dudit vélo (12) audit support (26), **caractérisé en ce que** la coiffe (28) fixe est prévue pour recevoir la selle (18) en butée avant mise en place de l'antivol solidarisant le cadre (14) et/ou la roue avant (20) du vélo (12) au support (26).

2. Dispositif (10) antivol de parking pour un vélo (12) selon la revendication 1, **caractérisé en ce que** la coiffe (28) est inclinée vers l'arrière.

3. Dispositif (10) antivol de parking pour un vélo (12) selon la revendication 1 ou 2, **caractérisé en ce que** la coiffe (28) est inclinée avec un angle de 30 à 45°.

4. Dispositif (10) antivol de parking pour un vélo (12) selon l'une quelconque des revendications précédentes, **caractérisé en ce que** la coiffe (28) est en forme de gouttière renversée, sensiblement à section en U renversé.

5. Dispositif (10) antivol de parking pour un vélo (12) selon l'une quelconque des revendications précédentes, **caractérisé en ce que** le support (26) est en forme d'arc avec les deux extrémités solidarisées au sol, l'arc étant dans un plan parallèle à celui du vélo, en position de parking, et la coiffe (28) en déport pour être dans le plan du vélo (12).

6. Dispositif (10) antivol de parking pour un vélo (12) selon l'une quelconque des revendications précédentes, **caractérisé en ce que** le support (26) est équipé d'un logement (30) de la roue arrière (22) de façon à interdire les mouvements latéraux de cette roue arrière (22).

7. Dispositif (10) antivol de parking pour un vélo (12) selon la revendication 6, **caractérisé en ce que** ce logement (30) est composé d'un tube (32) issu du support (26) et qui vient former un U horizontal, en position basse, entre le sol et le boîtier de pédalier, l'ouverture du U vers l'avant.

8. Dispositif (10) antivol de parking pour un vélo (12) selon l'une quelconque des revendications précédentes, **caractérisé en ce que** le support (26) est équipé d'un lien (34) souple, antivol, disposé pour venir sur l'avant lorsque le vélo (12) est en place.

## Claims

1. A parking antitheft device (10) for a bicycle (12) comprising at least one frame (14), a handlebar (16), a a saddle (18), a front wheel (20) and a rear wheel (22), said antitheft device (10) comprising a fixed frame (24), secured to the ground or to any construction and intended to receive said bicycle (12), comprising at least one support (26) equipped with a fixed cover (28) and intended to receive an antitheft member able to secure the frame (14) and/or the front wheel (20) of said bicycle (12) to said support (26), **characterised in that** the fixed cover (28) is operable to receive the saddle (18) in abutment before the antitheft member securing the frame (14) and/or the front wheel (20) of the bicycle (12) to the support (26) is fitted.

2. A parking antitheft device (10) for a bicycle (12) according to claim 1, **characterised in that** the cover (28) is inclined towards the rear.

3. A parking antitheft device (10) for a bicycle (12) according to claim 1 or 2, **characterised in that** the cover (28) is inclined with an angle of 30° to 45°.

4. A parking antitheft device (10) for a bicycle (12) according to any one of the preceding claims, **characterised in that** the cover (28) is in the form of an inverted channel, substantially with a cross-section in an inserted U.

5. A parking antitheft device (10) for a bicycle (12) according to any one of the preceding claims, **characterised in that** the support (26) is in the form of an arc with the two ends secured to the ground, the arc being in a plane parallel to that of the bicycle, in the parking position, and the cover (28) offset so as to be in the plane of the bicycle (12).

6. A parking antitheft device (10) for a bicycle (12) according to any one of the preceding claims, **characterised in that** the support (26) is equipped with a housing (30) of the rear wheel (22) so as to prevent the lateral movements of the rear wheel (22).

7. A parking antitheft device (10) for a bicycle (12) according to claim 6, **characterised in that** the housing (30) is composed of a tube (32) issuing from the support (26) and forming a horizontal U, in the low position, between the ground and the drive housing, with the opening of the U towards the front.

8. A parking antitheft device (10) for a bicycle (12) according to any one of the preceding claims, **characterised in that** the support (26) is equipped with a flexible antitheft link (34), disposed so as to come to the front when the bicycle (12) is in place.

## Patentansprüche

1. Diebstahlsicherung (10) zum Parken eines Fahrrads (12), das wenigstens einen Rahmen (14), einen Lenker (16), einen Sattel (18), ein Vorderrad (20) und ein Hinterrad (22) aufweist, wobei die Diebstahlsicherung (10) ein festes Gestell (24) umfasst, das mit dem Boden oder jedweder Konstruktion fest verbunden und dazu bestimmt ist, das Fahrrad (12) aufzunehmen, und das wenigstens einen Träger (26) umfasst, der mit einer festen Abdeckung (28) ausgestattet und dazu bestimmt ist, einen Diebstahlschutz aufzunehmen, der geeignet ist, den Rahmen (14) und/oder das Vorderrad (20) des Fahrrads (12) fest mit dem Träger (26) zu verbinden, **dadurch gekennzeichnet, daß** die feste Abdeckung (28) vorgesehen ist, um den Sattel (18) vor Anbringen des Diebstahlschutzes, welcher den Rahmen (14) und/oder das Vorderrad (20) des Fahrrads (12) fest mit dem Träger (26) verbindet, anliegend aufzunehmen.

2. Diebstahlsicherung (10) zum Parken eines Fahrrads (12) nach Anspruch 1, **dadurch gekennzeichnet, dass** die Abdeckung (28) nach hinten geneigt ist.

3. Diebstahlsicherung (10) zum Parken eines Fahrrads (12 nach Anspruch 1 oder 2, **dadurch gekennzeichnet, dass** die Abdeckung (28) in einem Winkel von 30 bis 45° geneigt ist.

4. Diebstahlsicherung (10) zum Parken eines Fahrrads (12) nach einem der vorhergehenden Ansprüche, **dadurch gekennzeichnet, dass** die Abdeckung (28) die Form einer umgedrehten Rinne, mit im Wesentlichen einen Querschnitt in der Form eines umgekehrten U aufweist.

5. Diebstahlsicherung (10) zum Parken eines Fahrrads (12) nach einem der vorhergehenden Ansprüche, **dadurch gekennzeichnet, dass** der Träger (26) die Form eines Bogens aufweist, dessen beide Enden fest mit dem Boden verbunden sind, wobei der Bogen - in der Parkposition - in einer zur Ebene des Fahrrads parallelen Ebene liegt, und die Abdeckung (28) hierzu seitlich versetzt ist, um sich in der Ebene des Fahrrads (12) zu befinden.

6. Diebstahlsicherung (10) zum Parken eines Fahrrads (12) nah einem der vorhergehenden Ansprüche, **dadurch gekennzeichnet, dass** der Träger (26) mit einer Aufnahme (30) für das Hinterrad (22) ausgestattet ist, um das seitliche Bewegen dieses Hinterrades (22) zu unterbinden.

7. Diebstahlsicherung (10) zum Parken eines Fahrrads (12) nach Anspruch 6, **dadurch gekennzeichnet, dass** diese Aufnahme (30) aus einem von dem Träger (26) ausgehenden Rohr (32) besteht, das ein horizontales U in unterer Position zwischen dem Boden und dem Tretlagergehäuse bildet, wobei die Öffnung des U nach vorne weist.

8. Diebstahlsicherung (10) zum Parken eines Fahrrads (12) nach einem der vorhergehenden Ansprüche, **dadurch gekennzeichnet, dass** der Träger (26) mit einem flexiblen Diebstahlsicherungs-Verbindungsteil (34) versehen ist, das angeordnet ist, um dann, wenn das Fahrrad (12) eingestellt ist, um den vorderen Teil herumgelegt zu werden.
